# EUROPEAN PATENT SPECIFICATION

(11) **EP 3 845 990 B1**
(45) Date of publication and mention of the grant of the patent: **01.01.2025**
(21) Application number: 19855476.8
(22) Date of filing: 11.07.2019
(51) Int. Cl.: G05D 1/00

(54) **AUTOMATIC RUNNING SYSTEM**
AUTOMATISCHES LAUFSYSTEM
SYSTÈME DE DÉPLACEMENT AUTOMATIQUE

(30) Priority: 29.08.2018 JP 2018160487
(43) Date of publication of application: 07.07.2021
(73) Proprietor: Yanmar Power Technology Co., Ltd., Osaka-shi Osaka 530-0013 (JP)
(72) Inventor: NISHII, Yasuto, Osaka-shi, Osaka 530-0013 (JP)
(74) Representative: Poindron, Cyrille
(86) International application number: PCT/JP2019/027506
(87) International publication number: WO 2020/044811

(56) References cited:
- EP-A1- 3 171 241
- EP-A1- 3 267 151
- WO-A1-2017/159801
- WO-A1-2017/159801
- WO-A1-2018/139038
- JP-A- 2010 191 502
- JP-A- 2017 068 870

## Description

### TECHNICAL FIELD

The present invention relates to an automatic travel system that makes a work vehicle automatically travel along a target travel path.

### BACKGROUND ART

The above-described automatic travel system makes a work vehicle automatically travel along a scheduled travel path including multiple travel paths generated in advance, based on positioning information of the work vehicle, which is acquired by use of a satellite positioning system or the like (see, for example, Patent Literature 1).

For example, in a case where the work vehicle is at a position outside the scheduled travel path, the system described in Patent Literature 1 searches for a travel path that the work vehicle can enter, in order to make the work vehicle enter the travel path and restart the automatic traveling. For the searching of a travel path, a search area is set in the travel direction (front side) of the work vehicle by use of position information and direction information of the work vehicle, so that, out of the travel paths existing inside the search area, the travel path at the nearest position from the work vehicle is selected as the travel path that the work vehicle can enter (see WO2018/139038 A1) .

### CITATION LIST

### Patent Literature

Patent Literature 1: Japanese Unexamined Patent Application Publication No. 2018-4589

### DISCLOSURE OF INVENTION

### PROBLEMS TO BE SOLVED BY THE INVENTION

In the system described in the above-described Patent Literature 1, since the search area is set on the front side of the work vehicle, a travel path that the work vehicle can enter is searched while the work vehicle travels forward. However, for example, there is also a case in which the travel path at the nearest position from the work vehicle exists on the rear side of the work vehicle. In this case, the work vehicle enters a travel path other than the travel path at the nearest position from the work vehicle. Therefore, if the search area is only set on the front side of the work vehicle, the work vehicle cannot enter a desired travel path based on a demand from the user or the like, so that the work cannot be started from the desired travel path.

In view of this situation, the main object of the present invention is to provide an automatic travel system capable of entering a desired travel path of a scheduled travel path including multiple travel paths so that the work can be started from the desired travel path.

### MEANS FOR SOLVING THE PROBLEMS

The first characteristic configuration of the present invention is to include: a path generation unit that generates a scheduled travel path including multiple travel paths on which a work vehicle is made to perform automatic traveling; an automatic travel control unit that is capable of making the work vehicle perform the automatic traveling along the scheduled travel path; an information acquisition unit that acquires position information and direction information of the work vehicle; and a specifying unit that specifies an automatic traveling candidate path on which the work vehicle can start automatically traveling before the automatic traveling is started by the work vehicle; and that the specifying unit sets candidate specification areas on a front side and a rear side of the work vehicle, based on the position information and direction information of the work vehicle acquired by the information acquisition unit, and specifies a travel path included in the candidate specification areas as the automatic traveling candidate path out of the multiple travel paths.

According to the present configuration, the specifying unit sets the candidate specification areas not only on the front side but also on the rear side of the work vehicle, based on the position information and direction information of the work vehicle. It is also possible for the specifying unit not only to specify the travel path included in the front-side candidate specification area as the automatic traveling candidate path but also to specify the travel path included in the rear-side candidate specification area as the automatic traveling candidate path. As a result, in a case where the desired travel path according to a demand from the user or the like or the work situation is included in the front-side candidate specification area, it is possible to enter the automatic traveling candidate path included in the front-side candidate specification area and start the work, and, in a case where the desired travel path is included in the rear-side candidate specification area, it is possible to enter the automatic traveling candidate path included in the rear-side candidate specification area and start the work. Therefore, in a scheduled travel path including multiple travel paths, it is possible to enter a desired travel path and start a work from the desired travel path.

The second characteristic configuration of the present invention is that: in a case where the specifying unit specifies a travel path included in a front-side candidate specification area as the automatic traveling candidate path, the automatic travel control unit makes the work vehicle travel forward so as to enter the automatic traveling candidate path; and, in a case where the specifying unit specifies a travel path included in a rear-side candidate specification area as the automatic traveling candidate path, the automatic travel control unit makes the work vehicle travel backward so as to enter the automatic traveling candidate path.

According to the present configuration, since the work vehicle is made to travel forward to enter the automatic traveling candidate path in a case where the travel path included in the front-side candidate specification area is specified as the automatic traveling candidate path, it is possible to smoothly enter the automatic traveling candidate path. Since the work vehicle is made to travel backward to enter the automatic traveling candidate path in a case where the travel path included in the rear-side candidate specification area is specified as the automatic traveling candidate path, it is possible to smoothly enter the automatic traveling candidate path. In this way, since it is possible to smoothly enter the automatic traveling candidate path while switching the forward traveling and reverse traveling of the work vehicle according to the specified situation of the automatic traveling candidate path, the automatic traveling from the automatic traveling candidate path can be efficiently and properly started.

The third characteristic configuration of the present invention is to include a display unit that displays the travel path included in the candidate specification areas, and that the display unit displays the travel path included in the front-side candidate specification area and the travel path included in the rear-side candidate specification area in a distinguishable manner.

According to the present configuration, since the display unit displays the travel path included in the front-side candidate specification area and the travel path included in the rear-side candidate specification area in a distinguishable manner, it is possible for the user or the like to easily recognize whether the specified automatic traveling candidate path is included in the front-side candidate specification area or is included in the rear-side candidate specification area. As a result, it is possible for the user or the like to compare the automatic traveling candidate path included in the front-side candidate specification area and the automatic traveling candidate path included in the rear-side candidate specification area and easily recognize which of them suits the demand.

The fourth characteristic configuration of the present invention is to include an area selection unit that is capable of selecting whether the candidate specification area is set on the front side of the work vehicle or the candidate specification area is set on the rear side of the work vehicle, and that the specifying unit sets the candidate specification area on the front side of the work vehicle or on the rear side of the work vehicle according to a selection state of the area selection unit.

According to the present configuration, for setting a candidate specification area, it is possible for the area selection unit to select whether the candidate specification area is set on the front side of the work vehicle or is set on the rear side of the work vehicle according to the demand from the user or the like, the work situation, etc. As a result, since it is possible to specify a proper automatic traveling candidate path according to the demand from the user or the like, the work situation, etc., it is possible to start the work from a proper automatic traveling candidate path, so that the convenience for the user or the like and the work efficiency can be improved.

### BRIEF DESCRIPTION OF DRAWINGS

FIG. 1 is a diagram illustrating a schematic configuration of an automatic travel system.
FIG. 2 is a block diagram illustrating a schematic configuration of the automatic travel system.
FIG. 3 is a diagram illustrating a work region in a state where a target travel path is generated.
FIG. 4 is a schematic diagram illustrating a state in which a front-side candidate specification area is set for specifying an automatic traveling candidate path.
FIG. 5 is a schematic diagram illustrating a state in which the front-side candidate specification area is set and a tractor is laterally facing a work path.
FIG. 6 is a schematic diagram illustrating a state in which a rear-side candidate specification area is set for specifying an automatic traveling candidate path.
FIG. 7 is a flowchart illustrating operation when the tractor is made to automatically travel in a straight traveling mode.
FIG. 8 is a schematic diagram illustrating a state in which a front-side candidate specification area is set for specifying an automatic traveling candidate path in the second embodiment.

### DESCRIPTION OF EMBODIMENTS

Embodiments of the automatic travel system according to the present invention will be explained, based on the drawings.

### (First Embodiment)

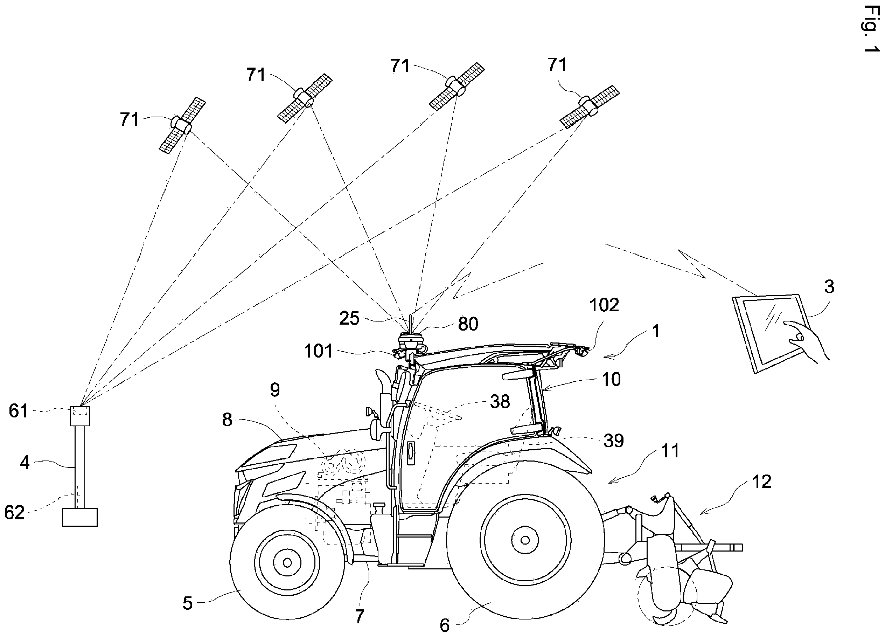

Although the tractor 1 is employed as the work vehicle in this automatic travel system as illustrated in FIG. 1, it is possible that a riding-type work vehicle, such as a riding-type rice transplanter, a combine, a riding-type mower, a wheel loader, or a snowplow, or an unmanned work vehicle, such as an unmanned mower, is employed instead of a tractor.

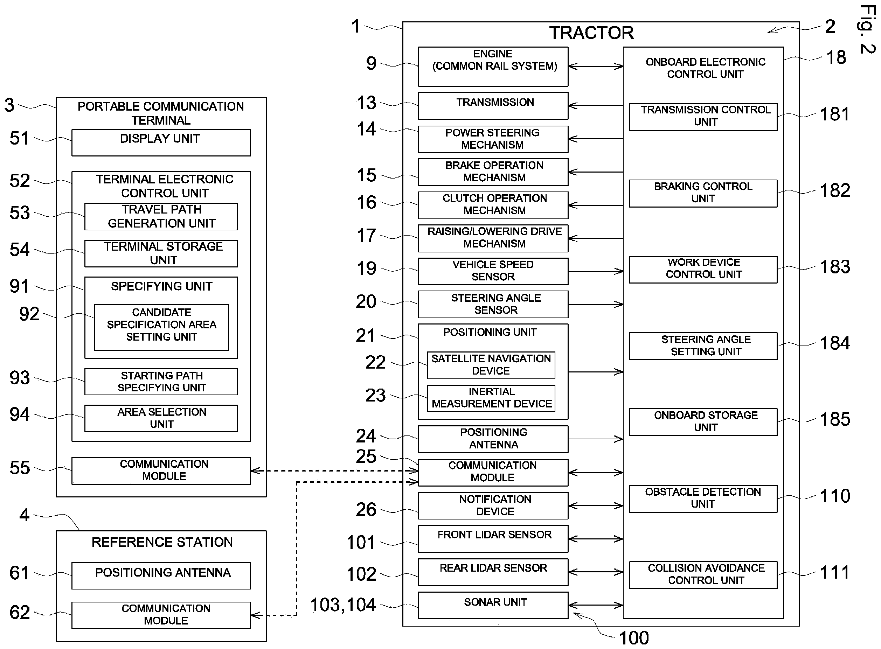

As illustrated in FIG. 1 and FIG. 2, this automatic travel system includes an automatic travel unit 2, which is mounted on the tractor 1, and a portable communication terminal 3, to which a communication setting for enabling communication with the automatic travel unit 2 is provided. As the portable communication terminal 3, it is possible to adopt a tablet-type personal computer, smartphone, or the like, which is provided with a display unit 51 (for example, a liquid crystal panel) to which a touch-operation can be performed.

The tractor 1 is provided with a travel vehicle body 7 including the left and right drivable front wheels 5, which function as steering wheels, and the left and right drivable rear wheels 6. A bonnet 8 is arranged in the front of the travel vehicle body 7, and an electronically-controlled diesel engine (hereinafter referred to as an engine) 9 having a common rail system is equipped in the bonnet 8. Behind the bonnet 8 of the travel vehicle body 7, there is provided a cabin 10, which forms a boarding-type driving section.

It is possible to configure the tractor 1 as a rotary cultivation model by connecting a rotary cultivation device, which is an example of the work device 12, to the rear part of the travel vehicle body 7 via a three-point link mechanism 11 in such a manner that the rotary cultivation device can move up and down and roll. Instead of a rotary cultivation device, it is possible to connect a work device 12 such as a plow, a seeding device, or a spraying device, to the rear part of the tractor 1.

As illustrated in FIG. 2, the tractor 1 includes an electronically-controlled transmission 13 for changing gears for the power from the engine 9, a full-hydraulic power steering mechanism 14 for steering the left and right front wheels 5, left and right side brakes (not illustrated in the drawing) for putting brakes on the left and right rear wheels 6, an electronically-controlled brake operation mechanism 15 for enabling a hydraulic operation of the left and right side brakes, a work clutch (not illustrated in the drawing) for engaging and disengaging power transmission to the work device 12 such as a rotary cultivation device, an electronically-controlled clutch operation mechanism 16 for enabling a hydraulic operation of the work clutch, an electro-hydraulically-controlled raising/lowering drive mechanism 17 for driving the work device 12 such as a rotary cultivation device to be raised and lowered, an onboard electronic control unit 18 having various kinds of control programs, etc., related to automatic traveling of the tractor 1 or the like, a vehicle speed sensor 19 for detecting a vehicle speed of the tractor 1, a steering angle sensor 20 for detecting steering angles of the front wheels 5, a positioning unit 21 for measuring the current position and the current direction of the tractor 1, etc.

Note that it is also possible that an electronically-controlled gasoline engine including an electronic governor is adopted for the engine 9. For the transmission 13, it is possible to adopt a hydro-mechanical continuously-variable transmission (HMT), a hydro-static continuously-variable transmission (HST), a belt-type continuously-variable transmission, or the like. For the power steering mechanism 14, it is also possible to adopt an electric power steering mechanism 14 including an electric motor or the like.

As illustrated in FIG. 1, a steering wheel 38 for enabling manual steering of the left and right front wheels 5 via the power steering mechanism 14 (see FIG. 2), a driver's seat 39 for a passenger, a touchscreen-type display unit, various kinds of operation tools, etc., are provided inside the cabin 10.

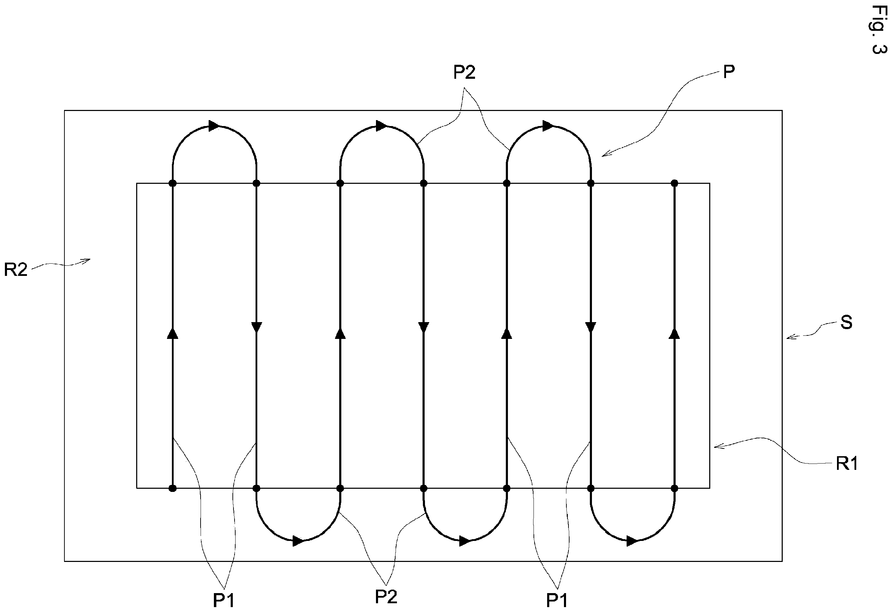

As illustrated in FIG. 2, the onboard electronic control unit 18 includes a transmission control unit 181 for controlling operation of the transmission 13, a braking control unit 182 for controlling operation of the left and right side brakes, a work device control unit 183 for controlling operation of the work device 12 such as a rotary cultivation device, a steering angle setting unit 184 for setting target steering angles of the left and right front wheels 5 at the time of automatic traveling and outputting the target steering angles to the power steering mechanism 14, a non-volatile onboard storage unit 185 for storing a target travel path P (for example, see FIG. 3) that is generated in advance for automatic traveling or the like, etc.

As illustrated in FIG. 2, the positioning unit 21 includes a satellite navigation device 22 for measuring the current position and the current direction of the tractor 1 by use of GPS (Global Positioning System), which is an example of a satellite positioning system (NSS/Navigation Satellite System), an inertial measurement device (IMU/Inertial Measurement Unit) 23 for measuring the posture, direction, etc., of the tractor 1 by use of a three-axis gyroscope and a three-direction acceleration sensor included therein, etc. The positioning unit 21 acquires the current position (position information) of the tractor 1, and the inertial measurement device 23 acquires direction information of the tractor 1, so that the positioning unit 21 and the inertial measurement device 23 correspond to an information acquisition unit. The positioning methods using GPS include DGPS (Differential GPS), RTK-GPS (Real Time Kinematic GPS), etc. In the present embodiment, RTK-GPS, which is suitable for positioning of a movable object, is adopted. Therefore, as illustrated in FIG. 1 and FIG. 2, a reference station 4 that enables positioning by use of RTK-GPS is installed at a given position in the vicinity of the field.

As illustrated in FIG. 2, the tractor 1 and the reference station 4 respectively include positioning antennas 24 and 61 for receiving radio waves transmitted from positioning satellites 71 (see FIG. 1), communication modules 25 and 62 for enabling wireless communication of various kinds of information including positioning information between the tractor 1 and the reference station 4, etc. Accordingly, the satellite navigation device 22 is capable of measuring the current position and the current direction of the tractor 1 with high precision, based on positioning information acquired by the positioning antenna 24 on the tractor side receiving radio waves from the positioning satellites 71 and positioning information acquired by the positioning antenna 61 on the reference station side receiving radio waves from the positioning satellites 71. In addition, since the positioning unit 21 includes the satellite navigation device 22 and the inertial measurement device 23, it is possible to measure the current position, current direction, and attitude angles (yaw angle, roll angle, pitch angle) of the tractor 1 with high precision.

The positioning antenna 24, the communication module 25, and the inertial measurement device 23 provided in the tractor 1 are housed in the antenna unit 80, as illustrated in FIG. 1. The antenna unit 80 is arranged at an upper position on the front side of the cabin 10.

As illustrated in FIG. 2, the portable communication terminal 3 includes a terminal electronic control unit 52 provided with various kinds of control programs for controlling the operation of the display unit 51, etc., a communication module 55 that enables wireless communication of various kinds of information, which includes positioning information, with the communication module 25 on the tractor side, etc. The terminal electronic control unit 52 includes a travel path generation unit 53 that generates a target travel path P (for example, see FIG. 3) for making the tractor 1 automatically travel, a non-volatile terminal storage unit 54 in which various types of input information input by the user and the target travel path P generated by the travel path generation unit 53 are stored, etc.

For the travel path generation unit 53 to generate a target travel path P, the user or the like, such as a driver or an administrator, inputs vehicle body information such as the type and model of the work vehicle or the work device 12 in accordance with input guidance, which is displayed on the display unit 51 of the portable communication terminal 3 for setting the target travel path, and the input vehicle body information is stored in the terminal storage unit 54. It is assumed that the work region S (see FIG. 3) for which the target travel path P is generated is a field, and the terminal electronic control unit 52 of the portable communication terminal 3 acquires field information including the shape and location of the field and stores the field information in the terminal storage unit 54.

For an explanation of the acquisition of the field information, the user or the like drives the tractor 1 to make the tractor 1 actually travel, so that the terminal electronic control unit 52 can acquire position information for specifying the shape, location, etc., of the field from the current position of the tractor 1, which is acquired by the positioning unit 21, etc. The terminal electronic control unit 52 specifies the shape and location of the field from the acquired position information and acquires the field information including the work region S, which is specified by the specified shape and location of the field. In the example illustrated in FIG. 3, the work region S in a rectangular shape is specified.

In a case where the field information including the specified shape, location, etc., of the field is stored in the terminal storage unit 54, the travel path generation unit 53 generates the target travel path P by use of the field information and the vehicle body information stored in the terminal storage unit 54.

As illustrated in FIG. 3, the travel path generation unit 53 segments the work region S to set the central region R1 and the outer peripheral region R2. The central region R1, which is set to be the central part of the work region S, is a reciprocating work region in which the tractor 1 is made to automatically travel in a reciprocating direction to perform a predetermined work (for example, a work such as cultivation). The outer peripheral region R2 is set around the central region R1. The travel path generation unit 53 calculates a space for turning traveling, which is required for making the tractor 1 perform turning traveling at the shore of the field, based on the front-rear width, left-right width, etc., of the tractor 1 and the turning radius included in the vehicle body information, for example. The travel path generation unit 53 segments the work region S into the central region R1 and the outer peripheral region R2, so as to ensure the calculated space, etc., in the outer periphery of the central region R1.

As illustrated in FIG. 3, the travel path generation unit 53 generates the target travel path P (corresponding to a scheduled travel path) by use of the vehicle body information, the field information, etc. For example, the target travel path P includes multiple linear work paths P1 (corresponding to travel paths), which have the same straight travel distance in the central region R1 and are arranged and set in parallel with a constant distance corresponding to the work width, and connection paths P2 for connecting the start point and the end point of adjacent work paths P1. The multiple work paths P1 are paths in which the tractor 1 is made to travel straight to perform a predetermined work. The connection paths P2 are U-turn paths in which the tractor 1 is made to change travel direction by 180 degrees without performing the predetermined work, and a connection path P2 connects the end point of a work path P1 and the start point of the next work path P1 that is adjacent. Note that the target travel path P illustrated in FIG. 3 is merely an example, and the setting of the target travel path can be modified as appropriate.

The target travel path P, which is generated by the travel path generation unit 53, can be displayed on the display unit 51 and is stored in the terminal storage unit 54 as path information that is associated with the vehicle body information, field information, etc. The path information includes the azimuths of the target travel path P, the set engine rotation speeds and target travel speeds, which are set according to the travel types of the tractor 1 on the target travel path P, etc.

In this way, in a case where the travel path generation unit 53 generates the target travel path P, the terminal electronic control unit 52 transfers the path information from the portable communication terminal 3 to the tractor 1, so that the onboard electronic control unit 18 of the tractor 1 can acquire the path information. The onboard electronic control unit 18 can make the tractor 1 automatically travel along the target travel path P, based on the acquired path information, while acquiring the current position of itself (the current position of the tractor 1) by use of the positioning unit 21. The current position of the tractor 1, which is acquired by the positioning unit 21, is transmitted on a real-time basis (for example, every few milliseconds) from the tractor 1 to the portable communication terminal 3, so that the portable communication terminal 3 is informed of the current position of the tractor 1.

As for the transfer of path information, it is possible to transfer the entire path information at once from the terminal electronic control unit 52 to the onboard electronic control unit 18 at a stage before the tractor 1 starts automatic traveling. In addition, for example, it is also possible to divide the path information including the target travel path P into multiple path parts of a predetermined distance that requires a small information amount. In this case, at the stage before the tractor 1 starts automatic traveling, only the initial path part of the path information is transferred from the terminal electronic control unit 52 to the onboard electronic control unit 18. After the automatic traveling starts, it is possible that each time the tractor 1 reaches a path acquisition point, which is set according to the information amount, etc., the path information only including the following path part corresponding to the point is transferred from the terminal electronic control unit 52 to the onboard electronic control unit 18.

In a case of starting automatic traveling of the tractor 1, for example, the user or the like moves the tractor 1 to the start point of the target travel path P, and, if various kinds of automatic traveling starting conditions are satisfied, the user operates the display unit 51 of the portable communication terminal 3 to provide an instruction for starting automatic traveling, so that the portable communication terminal 3 transmits the instruction for starting automatic traveling to the tractor 1. As a result, when the onboard electronic control unit 18 of the tractor 1 receives the instruction for starting automatic traveling, the automatic travel control for making the tractor 1 automatically travel along the target travel path P while acquiring the current position of itself (the current position of the tractor 1) by use of the positioning unit 21 is thereby started. The onboard electronic control unit 18 is configured as an automatic travel control unit that performs automatic travel control for making the tractor 1 automatically travel along the target travel path P in the work region S, based on positioning information of the tractor 1, which is acquired by the positioning unit 21 by use of a satellite positioning system.

The automatic travel control includes automatic transmission control for automatically controlling operation of the transmission 13, automatic braking control for automatically controlling operation of the brake operation mechanism 15, automatic steering control for automatically steering the left and right front wheels 5, working automatic control for automatically controlling operation of the work device 12 such as a rotary cultivation device, etc.

In the automatic transmission control, the transmission control unit 181 automatically controls operation of the transmission 13, so that the target travel speed, which is set according to the travel type, etc., of the tractor 1 on the target travel path P, based on the path information of the target travel path P including the target travel speed, an output from the positioning unit 21, and an output from the vehicle speed sensor 19, is acquired as the vehicle speed of the tractor 1.

In the automatic braking control, the braking control unit 182 automatically controls operation of the brake operation mechanism 15, so that the left and right side brakes properly put a brake on the left and right rear wheels 6 in a braking region, which is included in the path information of the target travel path P, based on the target travel path P and an output from the positioning unit 21.

In the automatic steering control, the steering angle setting unit 184 calculates and sets target steering angles of the left and right front wheels 5, based on the path information of the target travel path P and an output from the positioning unit 21, and the steering angle setting unit 184 outputs the set target steering angles to the power steering mechanism 14, so that the tractor 1 automatically travels on the target travel path P. Based on the target steering angles and an output from the steering angle sensor 20, the power steering mechanism 14 automatically steers the left and right front wheels 5, so as to acquire the target steering angles as the steering angles of the left and right front wheels 5.

In the working automatic control, based on the path information of the target travel path P and an output from the positioning unit 21, the work device control unit 183 automatically controls operation of the clutch operation mechanism 16 and the raising/lowering drive mechanism 17, so that the work device 12 starts a predetermined work (for example, a cultivation work) in response to the tractor 1 reaching a working start point such as the start point of a work path P1 (for example, see FIG. 3) and the work device 12 stops the predetermined work in response to the tractor 1 reaching a working end point such as the end point of a work path P1 (for example, see FIG. 3).

As described above, the automatic travel unit 2 of the tractor 1 is configured with the transmission 13, the power steering mechanism 14, the brake operation mechanism 15, the clutch operation mechanism 16, the raising/lowering drive mechanism 17, the onboard electronic control unit 18, the vehicle speed sensor 19, the steering angle sensor 20, the positioning unit 21, the communication module 25, etc.

In this embodiment, it is possible not only to make the tractor 1 automatically travel without a user or the like being in the cabin 10 but also to make the tractor 1 automatically travel with a user or the like being in the cabin 10. Therefore, it is possible not only to make the tractor 1 automatically travel along a target travel path P by the automatic travel control performed by the onboard electronic control unit 18 without a user or the like being in the cabin 10 but also to make the tractor 1 automatically travel along a target travel path P by the automatic travel control performed by the onboard electronic control unit 18 even in a case where a user or the like is in the cabin 10.

In the case where a user or the like is in the cabin 10, it is possible to switch between an automatic travel state, in which the onboard electronic control unit 18 makes the tractor 1 automatically travel, and a manual travel state, in which the tractor 1 is made to travel based on driving by the user or the like. Therefore, it is possible to switch from the automatic travel state to the manual travel state while the tractor 1 is automatically traveling on the target travel path P in the automatic travel state, and, conversely, it is possible to switch from the manual travel state to the automatic travel state while the tractor 1 is traveling in the manual travel state. As for the switching between the manual travel state and the automatic travel state, for example, it is possible that a switching operation unit for switching between the automatic travel state and the manual travel state is provided in the vicinity of the driver's seat 39, and it is also possible that such a switching operation unit is displayed on the display unit 51 of the portable communication terminal 3. Furthermore, it is possible that, in a case where a user operates the steering wheel 38 during the automatic travel control performed by the onboard electronic control unit 18, the automatic travel state is switched to the manual travel state.

As illustrated in FIG. 1 and FIG. 2, the tractor 1 includes an obstacle detection system 100 for detecting an obstacle around the tractor 1 (travel vehicle body 7) so as to avoid collision with the obstacle. The obstacle detection system 100 includes multiple LiDAR sensors 101 and 102 capable of three-dimensionally measuring the distance to a measurement target object by use of a laser, multiple sonar units 103 and 104 provided with sonars capable of measuring the distance to a measurement target object by use of ultrasonic waves, an obstacle detection unit 110, and a collision avoidance control unit 111.

It is assumed that the measurement target object, which is measured by the LiDAR sensors 101 and 102 and the sonar units 103 and 104, is an object, person, or the like. As the LiDAR sensors 101 and 102, a front LiDAR sensor 101 whose measurement target is the front side of the tractor 1 and a rear LiDAR sensor 102 whose measurement target is the rear side of the tractor 1 are provided. As the sonar units 103 and 104, a right-side sonar unit 103 whose measurement target is the right side of the tractor 1 and a left-side sonar unit 104 whose measurement target is the left side of the tractor 1 are provided.

The obstacle detection unit 110 is configured to perform an obstacle detection process for detecting a measurement target object, such as an object or a person within a predetermined distance, as an obstacle, based on measurement information of the LiDAR sensors 101 and 102 and the sonar units 103 and 104. The collision avoidance control unit 111 is configured to perform collision avoidance control for decelerating the tractor 1 or makes the tractor 1 stop traveling in a case where the obstacle detection unit 110 detects an obstacle. In the collision avoidance control, the collision avoidance control unit 111 not only decelerates the tractor 1 or makes the tractor 1 stop traveling but also activates the notification device 26, such as a notification buzzer or a notification lamp, for notification that an obstacle exists. In the collision avoidance control, the collision avoidance control unit 111 communicates with the portable communication terminal 3 from the tractor 1 by use of the communication modules 25 and 55 to make the display unit 51 display the existence of the obstacle, so that it is possible to provide a notification that the obstacle exists.

The obstacle detection unit 110 repeatedly performs the obstacle detection process based on measurement information of the LiDAR sensors 101 and 102 and the sonar units 103 and 104 on a real-time basis, so as to properly detect obstacles such as objects and people. The collision avoidance control unit 111 performs collision avoidance control for avoiding a collision with an obstacle detected on a real-time basis.

The obstacle detection unit 110 and the collision avoidance control unit 111 are included in the onboard electronic control unit 18. The onboard electronic control unit 18 is communicably connected to an electronic control unit for the engine, which is included in the common rail system, the LiDAR sensors 101 and 102, the sonar units 103 and 104, etc., via CAN (Controller Area Network).

In the automatic travel control of this automatic travel system, the onboard electronic control unit 18 is configured not only to make the tractor 1 automatically travel along a target travel path P from the start point to the goal point of the target travel path P but also to be able to execute a straight traveling mode, in which the tractor 1 is made to automatically travel along a work path P1 only on the multiple work paths P1 of a target travel path P.

In this straight traveling mode, although, on each of the multiple work paths P1, the onboard electronic control unit 18 makes the tractor 1 automatically travel along a work path P1 from the start point to the end point of the work path P1, the onboard electronic control unit 18 switches to the manual drive when the tractor 1 reaches the end point of the work path P1. Therefore, the turning traveling from the end point of the work path P1 to the start point of the next work path P1 is performed by the manual drive of the user or the like. On the target travel path P illustrated in FIG. 3, the travel direction of the tractor 1 is defined as the predetermined direction for each of the multiple work paths P1, but, in the straight traveling mode, the travel direction in which the tractor 1 is made to automatically travel is not defined as a predetermined direction for each of the multiple work paths P1, so that it is also possible to make the tractor 1 automatically travel in the direction opposite to the arrow illustrated in FIG. 3.

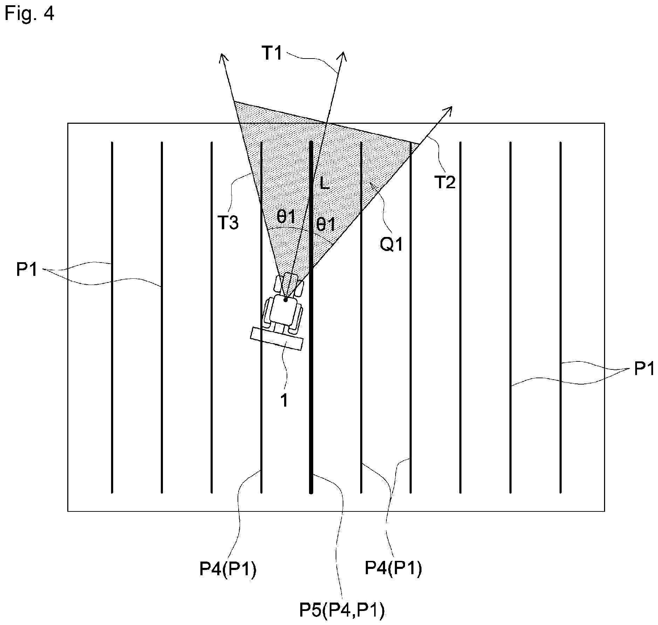

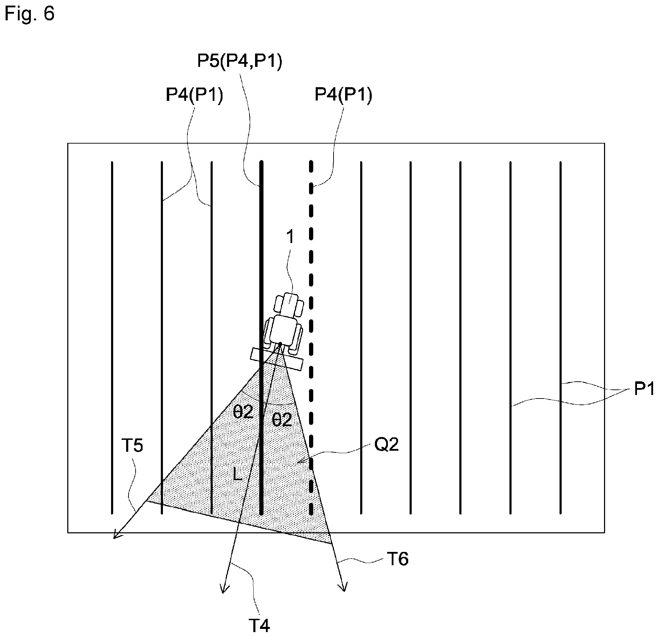

In a case of starting the automatic traveling of the tractor 1 in the straight traveling mode, it is possible to start the automatic traveling of the tractor 1 from any of the multiple work paths P1. As described above, since the travel path generation unit 53 generates the target travel path P including the multiple work paths P1, it is possible to specify any one of the multiple work paths P1 as the starting path P5 (see FIG. 4 and FIG. 6) and start the automatic traveling from the specified starting path P5.

As illustrated in FIG. 2, a specifying unit 91 that specifies an automatic traveling candidate path P4 (see FIG. 4 and FIG. 6), on which the tractor 1 can start automatically traveling in the straight traveling mode before the automatic traveling is started by the tractor 1, a starting path specifying unit 93 that specifies the starting path P5 (see FIG. 4 and FIG. 6) from automatic traveling candidate paths P4 specified by the specifying unit 91, etc., are included. The specifying unit 91 includes a candidate specification area setting unit 92 that sets candidate specification areas Q1 and Q2 (see FIG. 4 and FIG. 6) on the front side and rear side of the tractor 1, based on the acquired current position (position information) and direction information of the tractor 1, so as to specify the work paths P1 included in the candidate specification areas Q1 and Q2 as the automatic traveling candidate paths P4. Since the current position (position information) of the tractor 1 is acquired by the positioning unit 21 and the direction information of the tractor 1 is acquired by the inertial measurement device 23, the candidate specification area setting unit 92 is informed of the current position (position information) and direction information of the tractor 1 by communicating the current position (position information) and direction information of the tractor 1 by use of the communication modules 25 and 55.

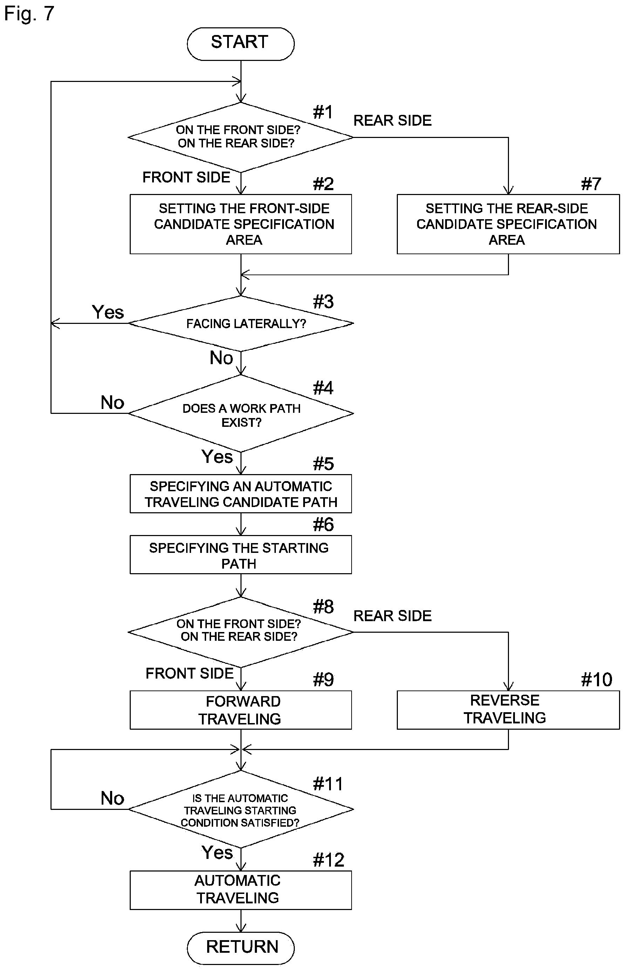

Hereinafter, with reference to the flowchart of FIG. 7, an explanation is given of the case of starting automatic traveling in the straight traveling mode, based on FIG. 4 to FIG. 6. FIG. 4 to FIG. 6 show a part of the display screen that is displayed on the display unit 51 of the portable communication terminal 3, and the current position of the tractor 1 and multiple work paths P1 are therein displayed in a superimposed manner.

For example, the tractor 1 is positioned near the work path P1 from which the automatic traveling of the tractor 1 is desired to be started. Here, based on the operation state of the tractor 1, the area selection unit 94 (see FIG. 2) selects whether the candidate specification area Q1 (see FIG. 4) is set on the front side of the tractor 1 or the candidate specification area Q2 (see FIG. 6) is set on the rear side of the tractor 1 (Step #1 of FIG. 7). The operation state of the tractor 1 is, for example, the switch state of a forward-reverse travel switching operation unit (reverser), which is for switching between forward traveling and reverse traveling of the tractor 1.

An explanation is given of the case in which the forward-reverse travel switching operation unit is switched to forward traveling. In this case, the area selection unit 94 selects a state in which the candidate specification area Q1 is set on the front side of the tractor 1, and the candidate specification area setting unit 92 sets the front-side candidate specification area Q1 on the front side of the tractor 1 according to the state selected by the area selection unit 94 (Step #2 in a case of FRONT SIDE in Step #1 of FIG. 7). As illustrated in FIG. 4, the candidate specification area setting unit 92 sets the right-side front straight line T2 and left-side front straight line T3 that are obtained by rotating the front traveling straight line T1, which extends in the forward traveling direction (front-side straight traveling direction) of the tractor 1, to the left and right by the rotation angle θ1 about the center, which is the current position of the tractor 1. The area between the right-side front straight line T2 and the left-side front straight line T3 and in the range up to the set distance L from the current position of the tractor 1 is set as the front-side candidate specification area Q1 by the candidate specification area setting unit 92.

In this way, the candidate specification area setting unit 92 sets the front-side candidate specification area Q1, which has a triangular shape extending in the front-side straight traveling direction of the tractor 1 with reference to the current position of the tractor 1. The front-side candidate specification area Q1 is not limited to such a triangular-shaped area as described above, and various shapes such as a quadrangular shape and an arc shape can be applied, for example. The candidate specification area setting unit 92 can set the size of the front-side candidate specification area Q1 to be a predetermined size but can also modify the setting of the size of the front-side candidate specification area Q1 according to the situation of the tractor 1, such as the current position of the tractor 1.

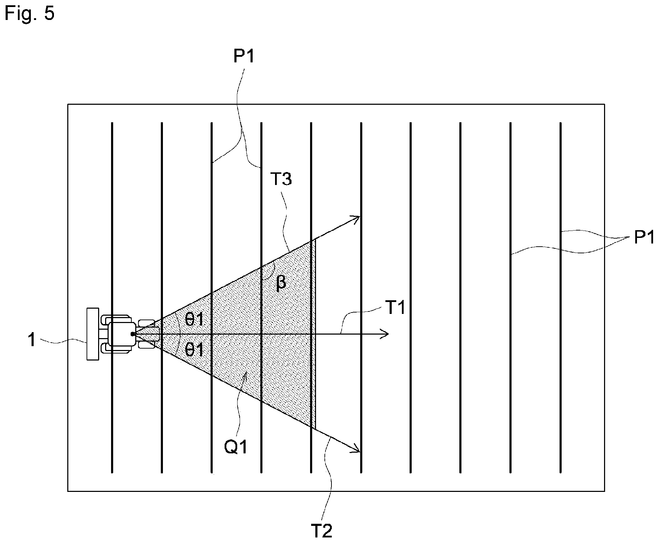

When the front-side candidate specification area Q1 is set, the specifying unit 91 determines whether or not the orientation of the forward traveling direction of the tractor 1 is laterally facing a work path P1 with respect to the forward traveling direction (Step #3 of FIG. 7). As illustrated in FIG. 5, for example, in a case where the angle ß formed by the left-side front straight line T3 (or the right-side front straight line T2) and the straight line along a work path P1 is a predetermined angle, the orientation of the forward traveling direction of the tractor 1 is laterally facing the work path P1. In this case, it is difficult to figure out from which work path P1 the automatic traveling of the tractor 1 is to be started, such as whether the tractor 1 is currently approaching the work path P1 from which the tractor 1 is to start the automatic traveling. Therefore, in a case where the orientation of the forward traveling direction of the tractor 1 is laterally facing a work path P1, the specifying unit 91 does not specify automatic traveling candidate paths P4 (in a case of Yes in Step #3 of FIG. 7).

If the orientation of the forward traveling direction of the tractor 1 is not laterally facing a work path P1, the specifying unit 91 determines whether or not a work path P1 exists inside the front-side candidate specification area Q1, so as to specify a work path P1 existing inside the front-side candidate specification area Q1 as an automatic traveling candidate path P4 (Step #5 in a case of No in Step #3 and Yes in Step #4 of FIG. 7). If one work path P1 exists inside the front-side candidate specification area Q1, the specifying unit 91 specifies the one work path P1 as the automatic traveling candidate path P4. As illustrated in FIG. 4, if multiple work paths P1 exist inside the front-side candidate specification area Q1, the specifying unit 91 specifies the multiple work paths P1 (the four work paths P1, that is, the fourth to seventh work paths P1 from the left in FIG. 4) as the automatic traveling candidate paths P4.

It is possible for the terminal electronic control unit 52 to display the automatic traveling candidate paths P4 specified by the specifying unit 91 on the display unit 51 so that it is recognizable that which work path P1 is specified as the automatic traveling candidate path P4 from multiple work paths P1. Since it will be recognizable with colors, for example, the terminal electronic control unit 52 makes the color of the automatic traveling candidate paths P4 on the display unit 51 different from that of the other work paths P1, so that the automatic traveling candidate paths P4 are recognizable.

The starting path specifying unit 93 specifies the starting path P5 from the automatic traveling candidate paths P4 specified by the specifying unit 91 (Step #6 of FIG. 7). If one automatic traveling candidate path P4 is specified by the specifying unit 91, the starting path specifying unit 93 specifies the automatic traveling candidate path P4 as the starting path P5. As illustrated in FIG. 4, if multiple automatic traveling candidate paths P4 are specified by the specifying unit 91, the starting path specifying unit 93 specifies one starting path P5 (indicated by the thick line in FIG. 4) from the multiple automatic traveling candidate paths P4, based on a starting path specification condition. For example, it is possible that the starting path specification condition is set as the automatic traveling candidate path P4 that is at the nearest position from the current position of the tractor 1. For example, it is also possible the starting path specification condition is set as the automatic traveling candidate path P4 selected on the display unit 51 by a selection operation of the user or the like, so that the starting path P5 can be specified according to the demand from the user or the like.

It is possible for the terminal electronic control unit 52 to display the starting path P5 specified by the starting path specifying unit 93 on the display unit 51 so that, as illustrated with the thick line in FIG. 4, which work path P1 is specified as the starting path P5 from multiple work paths P1 is recognizable. Since it will be recognizable with colors, for example, the terminal electronic control unit 52 makes the color of the automatic traveling candidate paths P4 on the display unit 51 different from that of the other work paths P1, so that the automatic traveling candidate paths P4 are recognizable.

Returning to Step #1 of FIG. 7, an explanation is given of the case in which the forward-reverse travel switching operation unit is switched to reverse traveling. In this case, the area selection unit 94 selects a state in which the candidate specification area Q2 is set on the rear side of the tractor 1, and the candidate specification area setting unit 92 sets the rear-side candidate specification area Q2 on the rear side of the tractor 1 according to the state selected by the area selection unit 94 (Step #7 in a case of REAR SIDE in Step #1 of FIG. 7). As illustrated in FIG. 6, the candidate specification area setting unit 92 sets the right-side rear straight line T5 and left-side rear straight line T6 that are obtained by rotating the rear traveling straight line T4, which extends in the reverse traveling direction (rear-side straight traveling direction) of the tractor 1, to the left and right by the rotation angle θ2 about the center, which is the current position of the tractor 1. It is possible that θ2 is the same rotation angle as θ1 or is a different rotation angle. The area between the right-side rear straight line T5 and the left-side rear straight line T6 and in the range up to the set distance L from the current position of the tractor 1 is set as the rear-side candidate specification area Q2 by the candidate specification area setting unit 92.

As with the front-side candidate specification area Q1, the rear-side candidate specification area Q2 is not limited to such a triangular-shaped area, and various shapes such as a quadrangular shape and an arc shape can be applied, for example. The candidate specification area setting unit 92 can also modify the setting of the size of the rear-side candidate specification area Q2 according to the situation of the tractor 1, such as the current position of the tractor 1.

The specifying unit 91 determines whether or not the orientation of the reverse traveling direction of the tractor 1 is laterally facing a work path P1 (Step #3 of FIG. 7). Here, although an illustration for the determination as to whether or not the orientation of the reverse traveling direction of the tractor 1 is laterally facing a work path P1 is omitted, the front and rear directions are opposite compared to FIG. 5, and therefore, in a case where the angle formed by the right-side rear straight line T5 or the left-side rear straight line T6 (see FIG. 6) and the straight line along a work path P1 is a predetermined angle, the specifying unit 91 determines that the tractor 1 is laterally facing a work path P1 with respect to the reverse traveling direction.

If the orientation of the reverse traveling direction of the tractor 1 is not laterally facing a work path P1, the specifying unit 91 determines whether or not a work path P1 exists inside the rear-side candidate specification area Q2, so as to specify a work path P1 existing inside the rear-side candidate specification area Q2 as an automatic traveling candidate path P4 (Step #5 in a case of No in Step #3 and Yes in Step #4 of FIG. 7). If one work path P1 exists inside the rear-side candidate specification area Q1, the specifying unit 91 specifies the one work path P1 as the automatic traveling candidate path P4. As illustrated in FIG. 6, if multiple work paths P1 exist inside the rear-side candidate specification area Q2, the specifying unit 91 specifies the multiple work paths P1 (the four work paths P1, that is, the second to fifth work paths P1 from the left in FIG. 6) as the automatic traveling candidate paths P4.

It is possible for the terminal electronic control unit 52 to display the automatic traveling candidate paths P4 specified by the specifying unit 91 on the display unit 51 so that it is recognizable that which work path P1 is specified as the automatic traveling candidate path P4 from multiple work paths P1. Since it will be recognizable with colors, for example, the terminal electronic control unit 52 makes the color of the automatic traveling candidate paths P4 on the display unit 51 different from that of the other work paths P1, so that the automatic traveling candidate paths P4 are recognizable.

As in the case in which the front-side candidate specification area Q1 is set, the starting path specifying unit 93 specifies the starting path P5 from the automatic traveling candidate paths P4 specified by the specifying unit 91 (Step #6 of FIG. 7). If one automatic traveling candidate path P4 is specified by the specifying unit 91, the starting path specifying unit 93 specifies the automatic traveling candidate path P4 as the starting path P5. If multiple automatic traveling candidate paths P4 are specified by the specifying unit 91, the starting path specifying unit 93 specifies one starting path P5 (indicated by the thick line in FIG. 6) from the multiple automatic traveling candidate paths P4, based on a starting path specification condition.

It is possible for the terminal electronic control unit 52 to display the starting path P5 specified by the starting path specifying unit 93 on the display unit 51 so that, as illustrated with the thick line in FIG. 6, which work path P1 is specified as the starting path P5 from multiple work paths P1 is recognizable. Since it will be recognizable with colors, for example, the terminal electronic control unit 52 makes the color of the automatic traveling candidate paths P4 on the display unit 51 different from that of the other work paths P1, so that the automatic traveling candidate paths P4 are recognizable.

For displaying the starting paths P5 on the display unit 51, as illustrated in FIG. 6, the terminal electronic control unit 52 displays the starting path P5 included in the front-side candidate specification area Q1 (indicated by the thick dotted line) and the starting path P5 included in the rear-side candidate specification area Q2 (indicated by the thick line) in a distinguishable manner. Although they are distinguished with the solid thick line and the dotted thick line in FIG. 6, since they are recognizable with colors, for example, it is possible for the display unit 51 to change the colors of the automatic traveling candidate paths P4 so as to be recognizable.

In this way, in the case where the front-side candidate specification area Q1 is set (see FIG. 4) as well as in the case where the rear-side candidate specification area Q2 is set (see FIG. 6), the specifying unit 91 specifies the automatic traveling candidate paths P4, so that the starting path specifying unit 93 specifies one starting path P5 from the automatic traveling candidate paths P4.

In FIG. 7, when the front-side candidate specification area Q1 is set, in a case where there is no work path P1 existing inside the front-side candidate specification area Q1, or, when the rear-side candidate specification area Q2 is set, in a case where there is no work path P1 existing inside the rear-side candidate specification area Q2, Step #1 to Step #4 and Step #7 are repeatedly performed. For example, in a case where the tractor 1 is moving, the front-side candidate specification area Q1 or the rear-side candidate specification area Q2 moves as well according to the movement (forward traveling or reverse traveling) of the tractor 1. Therefore, automatic traveling candidate paths P4 can be specified if there is work paths P1 existing inside the front-side candidate specification area Q1 or rear-side candidate specification area Q2 after the movement. Note that it is also possible to suspend the specification of automatic traveling candidate paths P4 if a suspension condition is satisfied, such as when a predetermined time period elapses after the specification of automatic traveling candidate paths P4 is started.

When the starting path P5 is specified, the onboard electronic control unit 18 performs automatic travel control, in order to make the tractor 1 automatically travel so as to approach the starting path P5 and get on the starting path P5. For making the tractor 1 automatically travel so as to approach the starting path P5 and get on the starting path P5, the onboard electronic control unit 18 switches whether to travel forward or to travel backward according to whether the forward-reverse travel switching operation unit is switched to forward traveling or to reverse traveling (Step #8 to Step #10 of FIG. 7). Note that, in practice, since the determination as to whether the forward-reverse travel switching operation unit is switched to forward traveling or to reverse traveling is made by the onboard electronic control unit 18 in Step #1, whether to travel forward or to travel backward on the starting path P5 is switched by use of the determination result of Step #1, instead of newly making a determination.

In a case where the forward-reverse travel switching operation unit is switched to forward traveling, the onboard electronic control unit 18 makes the tractor 1 automatically travel, so that the tractor 1 is made to travel forward to get on the starting path P5 (Step #9 in a case of FRONT SIDE in Step #8 of FIG. 7).

After making the tractor 1 automatically travel to get on the starting path P5, the onboard electronic control unit 18 checks whether the automatic traveling starting condition is satisfied, and, in a case where the automatic traveling starting condition is satisfied, the onboard electronic control unit 18 makes the tractor 1 start the automatic traveling along the starting path P5 upon receiving an instruction for starting the automatic traveling (Step #12 in a case of Yes in Step #11 of FIG. 7).

For example, the onboard electronic control unit 18 determines that the automatic traveling starting condition is satisfied if, out of the below-described (1) to (5), four conditions, that is, (1), (2), (3) or (4), and (5) are satisfied.
(1) The deviation between the current position of tractor 1 and the starting path P5 in the lateral direction is within a predetermined distance.
(2) The directional deviation between the direction of the travel direction of the tractor 1 and the direction of the starting path P5 is within a predetermined angle.
(3) In a case where the current position of the tractor 1 is in the central region R1 (see FIG. 3), the distance from the current position of the tractor 1 to the outer peripheral region R2 (see FIG. 3) is equal to or longer than a predetermined distance.
(4) In a case where the current position of the tractor 1 is in the outer peripheral region R2 (see FIG. 3), the distance from the current position of the tractor 1 to the central region R1 (see FIG. 3) is equal to or shorter than a predetermined distance.
(5) The state in which the starting path P5 satisfying the above-described (1) and (2) is the same continues for a predetermined time period (for example, one second).

In a case where the forward-reverse travel switching operation unit is switched to reverse traveling, the onboard electronic control unit 18 makes the tractor 1 automatically travel, so that the tractor 1 is made to travel backward to get on the starting path P5 (Step #10 in a case of REAR SIDE in Step #8 of FIG. 7).

In this case also, after making the tractor 1 automatically travel to get on the starting path P5, the onboard electronic control unit 18 checks whether the automatic traveling starting condition is satisfied, and, in a case where the automatic traveling starting condition is satisfied, the onboard electronic control unit 18 makes the tractor 1 start the automatic traveling along the starting path P5 upon receiving an instruction for starting the automatic traveling (Step #12 in a case of Yes in Step #11 of FIG. 7). Note that, since the automatic traveling of the tractor 1 along the starting path P5 is performed by forward traveling, the tractor 1 is switched from reverse traveling to forward traveling on the starting path P5.

Since it is necessary for the onboard electronic control unit 18 to acquire path information related to the starting path P5 and the multiple work paths P1 in order to perform automatic traveling along the starting path P5 and the multiple work paths P1, an explanation is given of the acquisition of this path information.

Since it is possible for the terminal electronic control unit 52 to transmit the path information related to the starting path P5 by use of the communication module 55 at the stage where the starting path P5 is specified, the onboard electronic control unit 18 can acquire the path information related to the starting path P5 by receiving the path information by use of the communication module 25. After the automatic traveling is started, the terminal electronic control unit 52 transmits path information related to work paths P1 by use of the communication module 55 each time the transmission timing comes. As a result, the onboard electronic control unit 18 acquires path information related to work paths P1 by receiving the path information by use of the communication module 25. Therefore, the onboard electronic control unit 18 performs the automatic travel control based on the acquired path information related to the starting path P5 and work paths P1, so as to make the tractor 1 perform the automatic traveling along the starting path P5 and work paths P1.

### (Second Embodiment)

This second embodiment is another embodiment of the configuration for the specifying unit 91 to specify automatic traveling candidate paths P4 in the above-described first embodiment. Hereinafter, the configuration for the specifying unit 91 to specify automatic traveling candidate paths P4 in the second embodiment will be explained, and the explanations of the other configurations are omitted.

Although the specifying unit 91 specifies work paths P1 included in the front-side candidate specification area Q1 or the rear-side candidate specification area Q2 as automatic traveling candidate paths P4 in the above-described first embodiment, the specifying unit 91 in this second embodiment does not specify a work path P1 corresponding to an exclusion condition as an automatic traveling candidate path P4 even though the work path P1 is included in the front-side candidate specification area Q1 or the rear-side candidate specification area Q2.

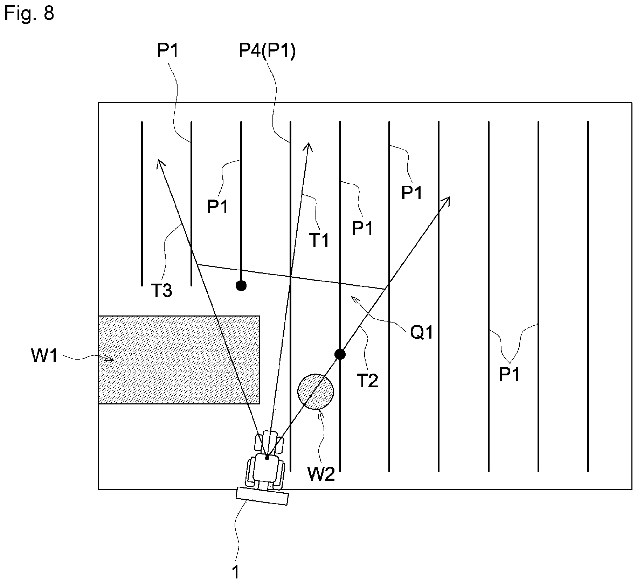

As for the exclusion condition, for example, it is possible to determine that a work path P1 corresponds to the exclusion condition if any of the conditions of below-described (1) to (4) are satisfied. Note that FIG. 8 shows a case in which the exclusion conditions defined in below-described (1) and (2) are met in a state where the front-side candidate specification area Q1 is set. In a state where the rear-side candidate specification area Q2 is set, since whether the front side or the rear side is the only difference, the illustration thereof is omitted.

(1) As illustrated in FIG. 8, such a work path P1 where an outside-field region W1 exists between the current position of the tractor 1 and an end part of the work path P1 meets the exclusion condition. In FIG. 8, although the third work path P1 from the left is included in the front-side candidate specification area Q1, the outside-field region W1 exists between the end part (lower end part) of the work path P1 and the current position of the tractor 1.
(2) When the front-side candidate specification area Q1 is set, as illustrated in FIG. 8, in a case where there exists such a work path P1 that has an intersection with the right-side front straight line T2 or left-side front straight line T3 of the front-side candidate specification area Q1, if there is an obstacle W2 between the current position of the tractor 1 and the intersection of the right-side front straight line T2 or left-side front straight line T3 and the work path P1, the work path P1 meets the exclusion condition. In FIG. 8, although there exists the intersection of the fifth work path P1 from the left and the right-side front straight line T2, the obstacle W2 exists between the current position of the tractor 1 and the intersection. In a case where the rear-side candidate specification area Q2 is set, when there exists such a work path P1 that has an intersection with the right-side rear straight line T5 (see FIG. 6) or left-side rear straight line T6 (see FIG. 6) of the rear-side candidate specification area Q2, if there is an obstacle W2 between the current position of the tractor 1 and the intersection of the right-side rear straight line T5 or left-side rear straight line T6 and the work path P1, the work path P1 meets the exclusion condition.
(3) In a case where the front-side candidate specification area Q1 is set, such a work path P1 of which the distance from the current position of the tractor 1 to the intersection with the right-side front straight line T2 or left-side front straight line T3 is longer than the maximum set distance meets the exclusion condition. In a case where the rear-side candidate specification area Q2 is set, such a work path P1 of which the distance from the current position of the tractor 1 to the intersection with the right-side rear straight line T5 or left-side rear straight line T6 is longer than the maximum set distance meets the exclusion condition. Further, it is also possible to configure so that such a work path P1 of which the distance from the current position of the tractor 1 to the nearer end part thereof is longer than the maximum set distance meets the exclusion condition.
(4) The work path P1 on which the automatic traveling has already been performed and the work has already been done meets the exclusion condition. Note that the terminal electronic control unit 52 is informed of the work path P1 on which the work has already been done out of the multiple work paths P1 and is capable of displaying the work path P1 on which the work has already been done on the display unit 51 in a recognizable manner by making the work path P1 on which the work has already been done, etc.

The exclusion condition can be set as appropriate, and, for example, one condition or multiple conditions can be selected from above-described (1) to (4).

### (Other Embodiments)

Explanations are given of other embodiments of the present invention. Note that the configuration of each embodiment explained below can be applied not only independently but also in combination with the configuration of another embodiment.
(1) The configuration of the work vehicle can be modified in various ways. For example, it is also possible that the work vehicle is configured as a hybrid model including the engine 9 and an electric motor for driving, and, alternatively, it is also possible that the work vehicle is configured as an electric model including an electric motor for driving instead of the engine 9. For example, it is also possible that the work vehicle is configured as a semi-crawler model including left and right crawlers as traveling parts, instead of the left and right rear wheels 6. For example, it is also possible that the work vehicle is configured as a rear-wheel-steering model in which the left and right rear wheels 6 function as the steering wheels.
(2) Although the example in which the travel path generation unit 53, the specifying unit 91, the candidate specification area setting unit 92, the starting path specifying unit 93, and the area selection unit 94 are included in the portable communication terminal 3 is shown in the above-described embodiment, it is also possible that, for example, the travel path generation unit 53, the specifying unit 91, the candidate specification area setting unit 92, the starting path specifying unit 93, and the area selection unit 94 are included on the work vehicle side of the tractor 1 or in an external management device.
(3) In the above-described embodiment, although the case in which, when the tractor 1 starts automatically traveling in the straight traveling mode, the automatic traveling of the tractor 1 is started from any one of multiple work paths P1 is exemplified, it is also possible that, when the tractor 1 starts automatically traveling, not just in the straight traveling mode, the automatic traveling of the tractor 1 is started from any one of multiple work paths P1, not just from the start point of the target travel path P.

Here, as illustrated in FIG. 3, since a predetermined travel direction is set for each of the multiple work paths P1, it is possible to specify a work path P1 whose travel direction is the same as the forward traveling direction of the tractor 1 as an automatic traveling candidate path P4. That is, when the front-side candidate specification area Q1 and the rear-side candidate specification area Q2 are set for specifying automatic traveling candidate paths P4, such a work path P1 that satisfies a condition of being a work path P1 whose travel direction is the same as the forward traveling direction of the tractor 1 in addition to a condition of being a work path P1 included in the front-side candidate specification area Q1 and the rear-side candidate specification area Q2 can be specified as an automatic traveling candidate path P4 by the specifying unit 91.

(4) In the above-described embodiment, as illustrated in FIG. 6, the starting path P5 included in the front-side candidate specification area Q1 (indicated by the thick dotted line) and the starting path P5 included in the rear-side candidate specification area Q2 (indicated by the thick line) are displayed on the display unit 51 in a distinguishable manner. Alternatively, it is also possible that the automatic traveling candidate paths P4 included in the front-side candidate specification area Q1 and the automatic traveling candidate paths P4 included in the rear-side candidate specification area Q2 are displayed on the display unit 51 in a distinguishable manner by the terminal electronic control unit 52. Here, it is possible that the automatic traveling candidate paths P4 and the starting paths P5 are displayed in a distinguishable manner as well.

### INDUSTRIAL APPLICABILITY

The present invention can be applied to various kinds of automatic travel systems that make a work vehicle automatically travel along a target travel path.

### DESCRIPTION OF REFERENCE NUMERALS

- 1: tractor (work vehicle)
- 18: onboard electronic control unit (automatic travel control unit)
- 21: positioning unit (information acquisition unit)
- 23: inertial measurement device (information acquisition unit)
- 51: display unit
- 53: travel path generation unit (path generation unit)
- 91: specifying unit
- 94: area selection unit
- Q1: front-side candidate specification area
- Q2: rear-side candidate specification area
- P: target travel path (scheduled travel path)
- P1: work path (travel path)
- P4: automatic traveling candidate path

## Claims

1. An automatic travel system to make a work vehicle (1) automatically travel along a scheduled travel path, comprising:
a path generation unit (53) that generates the scheduled travel path including a plurality of travel paths (P1) ;
an automatic travel control unit (18) configured to make the work vehicle (1) to perform the automatic traveling along the scheduled travel path;
an information acquisition unit (21, 23) configured to acquire position information and direction information of the work vehicle (1); and
a specifying unit (91) configured to specify an automatic traveling candidate path (P4), in order to allow the work vehicle (1) to start automatically traveling on it before the automatic traveling is started by the work vehicle (1),
wherein the specifying unit (91) is further configured to set candidate specification areas (Q1, Q2) on a front side and a rear side of the work vehicle (1), based on the position information and direction information of the work vehicle (1) acquired by the information acquisition unit (21, 23), and to specify a travel path included in the candidate specification areas (Q1, Q2) as the automatic traveling candidate path out of the plurality of travel paths.

2. The automatic travel system according to claim 1,
wherein, in a case where the specifying unit (91) specifies a travel path included in a front-side candidate specification area (Q1) as the automatic traveling candidate path (P4), the automatic travel control unit (18) makes the work vehicle (1) travel forward so as to enter the automatic traveling candidate path (P4), and
wherein, in a case where the specifying unit (91) specifies a travel path included in a rear-side candidate specification area (Q2) as the automatic traveling candidate path (P4), the automatic travel control unit (18) makes the work vehicle travel backward so as to enter the automatic traveling candidate path (P4).

3. The automatic travel system according to claim 1 or 2 comprising a display unit (51) configured to display the travel path included in the candidate specification areas (Q1, Q2),
wherein the display unit (51) displays the travel path included in the front-side candidate specification area (Q1)and the travel path included in the rear-side candidate specification area (Q2)in a distinguishable manner.

4. The automatic travel system according to any one of claims 1 to 3 comprising an area selection unit (94) configured to select whether the candidate specification area (P4) is set on the front side of the work vehicle (1) or the candidate specification area (P4) is set on the rear side of the work vehicle,
wherein the specifying unit (91) sets the candidate specification area (Q1, Q2) on the front side of the work vehicle (1) or on the rear side of the work vehicle (1) according to a selection state of the area selection unit (94).

## Patentansprüche

1. Automatisches Fahrsystem zum Bewirken, dass ein Arbeitsfahrzeug (1) automatisch entlang eines geplanten Fahrpfades fährt, das Folgendes umfasst:
eine Pfaderzeugungseinheit (53), die den geplanten Fahrpfad erzeugt, der eine Vielzahl von Fahrpfaden (P1) beinhaltet;
eine automatische Fahrsteuereinheit (18), die dazu ausgelegt ist zu bewirken, dass das Arbeitsfahrzeug (1) das automatische Fahren entlang des geplanten Fahrpfades durchführt;
eine Informationserfassungseinheit (21, 23), die dazu ausgelegt ist, Positionsinformationen und Richtungsinformationen des Arbeitsfahrzeugs (1) zu erfassen; und
eine Spezifikationseinheit (91), die dazu ausgelegt ist, einen automatischen Fahrpfadkandidaten (P4) zu spezifizieren, um es dem Arbeitsfahrzeug (1) zu erlauben, das automatische Fahren darauf zu starten, bevor das automatische Fahren vom Arbeitsfahrzeug (1) gestartet wird,
wobei die Spezifikationseinheit (91) ferner dazu ausgelegt ist, auf Basis der Positionsinformationen und der Richtungsinformationen des Arbeitsfahrzeugs (1), die von der Informationserfassungseinheit (21, 23) erfasst werden, Spezifikationsbereichskandidaten (Q1, Q2), auf einer Vorderseite und einer Rückseite des Arbeitsfahrzeugs (1) einzustellen und einen Fahrpfad zu spezifizieren, der in den Spezifikationsbereichskandidaten (Q1, Q2) beinhaltet ist, als den automatischen Fahrpfadkandidaten der Vielzahl von Fahrpfaden zu spezifizieren.

2. Automatisches Fahrsystem nach Anspruch 1,
wobei in einem Fall, in dem die Spezifikationseinheit (91) einen Fahrpfad spezifiziert, der in einem vorderen Spezifikationsbereichskandidaten (Q1) beinhaltet ist, als den automatischen Fahrpfadkandidaten (P4) spezifiziert, die automatische Fahrsteuereinheit (18) bewirkt, dass das Arbeitsfahrzeug (1) vorwärts fährt, um in den automatischen Fahrpfadkandidaten (P4) einzutreten, und
wobei in einem Fall, in dem die Spezifikationseinheit (91) einen Fahrpfad spezifiziert, der in einem hinteren Spezifikationsbereichskandidaten (Q2) beinhaltet ist, als den automatischen Fahrpfadkandidaten (P4) spezifiziert, die automatische Fahrsteuereinheit (18) bewirkt, dass das Arbeitsfahrzeug rückwärts fährt, um in den automatischen Fahrpfadkandidaten (P4) einzutreten.

3. Automatisches Fahrsystem nach Anspruch 1 oder 2, das eine Anzeigeeinheit (51) umfasst, die dazu ausgelegt ist, den Fahrpfad, der in den Spezifikationsbereichskandidaten (Q1, Q2) beinhaltet ist, anzuzeigen,
wobei die Anzeigeeinheit (51) den Fahrpfad, der im vorderen Spezifikationsbereichskandidaten (Q1) enthalten ist, und den Fahrpfad, der in den hinteren Spezifikationsbereichskandidaten (Q2) beinhaltet ist, in einer unterscheidbaren Weise anzeigt.

4. Automatisches Fahrsystem nach einem der Ansprüche 1 bis 3, das eine Bereichsauswahleinheit (94) umfasst, die dazu ausgelegt ist auszuwählen, ob der Spezifikationsbereichskandidat (P4) auf die Vorderseite des Arbeitsfahrzeugs (1) eingestellt ist oder der Spezifikationsbereichskandidat (P4) auf die Rückseite des Arbeitsfahrzeugs eingestellt ist,
wobei die Spezifikationseinheit (91) den Spezifikationsbereichskandidaten (Q1, Q2) gemäß einem Auswahlzustand der Bereichsauswahleinheit (94) auf die Vorderseite des Arbeitsfahrzeugs (1) oder auf die Rückseite des Arbeitsfahrzeugs (1) einstellt.

## Revendications

1. Système de déplacement automatique pour faire en sorte qu'un véhicule de travail (1) se déplace automatiquement le long d'un chemin de travail planifié, comprenant :
une unité de génération de chemin (53) qui génère le chemin de travail planifié comportant une pluralité de chemins de travail (P1) ;
une unité de commande de déplacement automatique (18) configurée pour faire en sorte que le véhicule de travail (1) effectue le déplacement automatique le long du chemin de travail planifié ;
une unité d'acquisition d'informations (21, 23) configurée pour acquérir des informations de position et des informations de direction du véhicule de travail (1) ; et
une unité de spécification (91) configurée pour spécifier un chemin candidat de déplacement automatique (P4), afin de permettre au véhicule de travail (1) de commencer à se déplacer automatiquement sur celui-ci avant que le véhicule de travail (1) ne lance le déplacement automatique,
dans lequel l'unité de spécification (91) est en outre configurée pour définir des zones de spécification candidates (Q1, Q2) sur le côté avant et le côté arrière du véhicule de travail (1), sur la base des informations de position et des informations de direction du véhicule de travail (1) acquises par l'unité d'acquisition d'informations (21, 23), et pour spécifier un chemin de travail inclus dans les zones de spécification candidates (Q1, Q2) comme chemin candidat de déplacement automatique parmi la pluralité de chemins de travail.

2. Système de déplacement automatique selon la revendication 1,
dans lequel, dans le cas où l'unité de spécification (91) spécifie un chemin de travail inclus dans une zone de spécification candidate (Q1) du côté avant comme chemin candidat de déplacement automatique (P4), l'unité de commande de déplacement automatique (18) fait en sorte que le véhicule de travail (1) avance de sorte à entrer dans le chemin candidat de déplacement automatique (P4), et
dans lequel, dans le cas où l'unité de spécification (91) spécifie un chemin de travail inclus dans une zone de spécification candidate (Q2) du côté arrière comme chemin candidat de déplacement automatique (P4), l'unité de commande de déplacement automatique (18) fait en sorte que le véhicule de travail recule de sorte à entrer dans le chemin candidat de déplacement automatique (P4).

3. Système de déplacement automatique selon la revendication 1 ou 2 comprenant une unité d'affichage (51) configurée pour afficher le chemin de travail inclus dans les zones de spécification candidates (Q1, Q2),
dans lequel l'unité d'affichage (51) affiche le chemin de travail inclus dans la zone de spécification candidate (Q1) du côté avant et le chemin de travail inclus dans la zone de spécification candidate (Q2) du côté arrière d'une manière distincte.

4. Système de déplacement automatique selon l'une des revendications 1 à 3, comprenant une unité de sélection de zone (94) configurée pour sélectionner si la zone de spécification candidate (P4) est définie sur le côté avant du véhicule de travail (1) ou si la zone de spécification candidate (P4) est définie sur le côté arrière du véhicule de travail,
dans lequel l'unité de spécification (91) définit la zone de spécification candidate (Q1, Q2) sur le côté avant du véhicule de travail (1) ou sur le côté arrière du véhicule de travail (1) en fonction d'un état de sélection de l'unité de sélection de zone (94).
